# EUROPEAN PATENT SPECIFICATION

(11) **EP 3 999 897 B1**
(45) Date of publication and mention of the grant of the patent: **25.06.2025**
(21) Application number: 20761889.3
(22) Date of filing: 17.07.2020
(51) Int. Cl.: G02B 21/12, G01B 9/02, G02B 27/14

(54) **HIGH SENSITIVITY OPTICAL DEVICES USING PUPIL SPLITTIG MEANS**
HOCHEMPFINDLICHE OPTISCHE VORRICHTUNGEN MIT PUPILLENTEILUNG
DISPOSITIFS OPTIQUES À HAUTE SENSIBILITÉ FAISANT APPEL À DES MOYENS DE DIVISION DE PUPILLE

(30) Priority: 17.07.2019 WO PCT/IB2019/056106
(43) Date of publication of application: 25.05.2022
(73) Proprietor: Scoptonic SP. Z.O.O., 87-100 Torun (PL)
(72) Inventor: SZLAG, Daniel, 87-100 Torun (PL); LASSER, Theo, 1112 Echichens (CH); OSSOWSKI, Pawel, 87-100 Torun (PL)
(74) Representative: Byrne, Declan
(86) International application number: PCT/IB2020/056753
(87) International publication number: WO 2021/009723

(56) References cited:
- JP-A- H01 134 285
- US-B1- 7 009 708
- FIEÃ M ET AL: "Versatile apparatus for attosecond metrology and spectroscopy", REVIEW OF SCIENTIFIC INSTRUMENTS, AIP, MELVILLE, NY, US, vol. 81, no. 9, 14 September 2010 (2010-09-14), pages 93103 - 93103, XP012146026, ISSN: 0034-6748, DOI: 10.1063/1.3475689

## Description

### CROSS-REFERENCE TO RELATED APPLICATIONS

The present application claims priority to International Patent Application PCT/IB2019/056106 filed on July 17th, 2019.

### FIELD OF THE INVENTION

The invention relates to imaging systems and more particularly to tomographic and interferometric imaging systems with high sensitivity.

### STATE OF THE ART

High contrast imaging, improved low signal detection, enhanced imaging depth and overall high imaging quality, since decades stay as an important endeavor for optical imaging. As an example, in dark-field microscopy these goals were successfully addressed by splitting the illumination channel and the detection channel. However, this method shows its limitation when intending to visualize 3D objects. The 3D imaging based on the confocal principle slices the 3D object into so-called optical sections. Out-of-focus light is strongly suppressed due to the spatial filtering of the pinhole. A recently published darkfield confocal microscope [1] showed an improved contrast. However, the limited penetration depth remains and is limiting the use of confocal imaging for 3D imaging.

An improved penetration depth can be obtained with an imaging technique, like Optical Coherence Tomography (OCT) [2,3]. OCT is relying on the coherence properties of light. Due to the interferometric principle of OCT no depth scan is needed. This advantage results in a significant improvement of the imaging speed and the detection sensitivity. Over the last 3 decades OCT has been mainly applied as a diagnostic tool for many medical disciplines. Originally, this field started with the so-called time-domain optical coherence tomography (TD-OCT), where the position of a reference mirror in the interferometer is rapidly scanned in order to extract the scattering amplitude from the interference signal and to generate a depth profile of the sample, the so-called A-scan.

The tomograms i.e. the cross-sectional images are synthesized from a series of laterally adjacent A-scans. This two-dimensional map or tomogram of a reflectivity profile over depth and lateral extent is the so-called "B-scan".

The axial resolution in OCT is given by the width of the 'coherence gate', which is determined by the spectrum of the used broadband light source. The transversal resolution of the OCT tomogram is determined by the resolution properties of the sample arm optics, usually given by the numerical aperture of the objective.

Today, Fourier Domain optical coherence tomography (FD-OCT) largely superseded the classical TD-OCT. In FD-OCT, the reference arm has a fixed arm-length. The scattering amplitude over depth is derived from the optical spectrum of the detected light resulting from the back-reflected sample field and superimposed with the reference field. This light field is spectrally decomposed by a spectrometer and detected by an array detector, such as a CMOS device, allowing the simultaneous registration of the spectrally resolved information. The registered spectrum encodes the complete depth profile and allows therefore a high-speed acquisition of depth profiles.

In summary, FD-OCT does not need a depth scanning section-by-section and records the full depth information in parallel.

During the last 2 decades, FDOCT evolved into 2 techniques, the so-called spectral OCT (SOCT) and the swept source OCT (SS-OCT). SOCT acquires the signal based on a simultaneous full spectrum acquisition, whereas SS-OCT sweeps a narrow band light source at high speed over the entire spectral range. The signal is detected by an ultrafast single point detector. The complexity of a spectrometer in SOCT is replaced by the complexity of a fast swept source. However, both techniques share the above-mentioned sensitivity advantage.

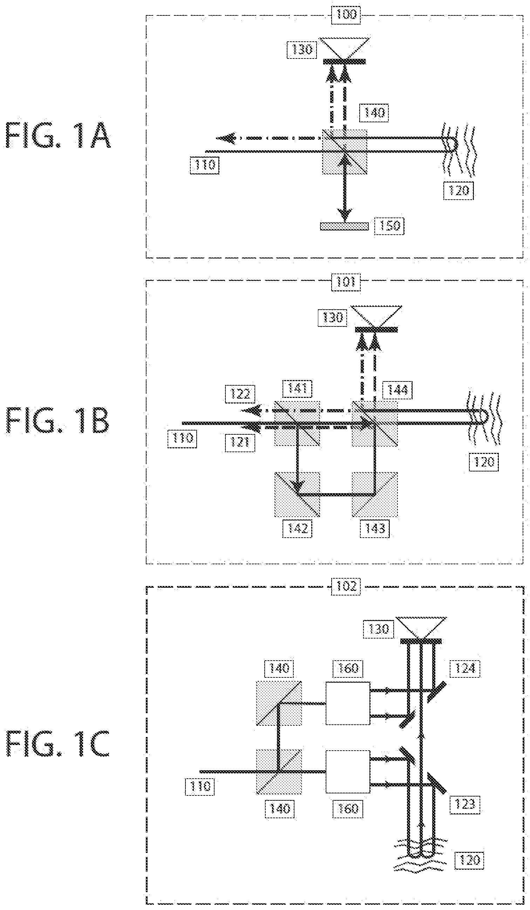

Classical OCT systems are realized in a Michelson or Mach-Zehnder interferometer configurations (Fig. 1 A and Fig. 1 B correspondingly) where the source of light is split into a reference and a sample beam paths. The light reflected from an object is superimposed with the reference beam. This allows a heterodyne detection, where the weak signal from the object is strongly amplified by the reference field. Due to this property, OCT provides a significantly higher penetration depth compared to confocal microscopy [4].

The lateral resolution of OCT systems is limited by the numerical aperture (NA) as is the case in classical microscopy. Increasing the lateral resolution by using higher numerical aperture (proportional in NA⁻¹) as in confocal microscopy, will limit strongly the depth of field (proportional in NA⁻²). This reduction of the field depth, almost eliminates an essential feature of OCT, the in depth imaging without depth scan.

Extended focus Fourier domain optical coherence microscopy (xf-OCM) [5][6][7] overcame this limitation by using a Bessel beam. This Bessel beam can be generated by means of refractive or diffractive optical element as well as by a programmable spatial light modulator (SLM) and enables a considerable extent of the focal field, while the transverse resolution remains nearly constant along the fully extended focal range [6]. Different methods and apparatus have been proposed for generating a light field having an extended depth of focus. The conception of an OCT interferometer comprising an axicon lens disposed in the sample arm to simultaneously achieve high lateral resolution and a greater depth of focus [8][9] or generating an efficient extended focus light beam with substantially uniform axial intensity [10] represents an optical solution to this problem. However, a detection performance across axicon lens (used as an objective) represents a significant limitation compared to a Gaussian detection. To avoid a double pass through the axicon lens, the detection and illumination paths has been decoupled. This solution was shown in the patent application WO2007085992A1 [5].

However a further disadvantage of an extended focus optical coherence microscopy (xfOCM, as disclosed in [5]) remains the high sensitivity to low angle reflection, where especially the first air-sample interface strongly overrides the weak signal of light scattered from the in-depth structures, overall resulting in a low sensitivity of such an optical instrument [11].

Classical dark-field microscopy illuminates thin or thick but transparent samples with a ring illumination of high NA. This concept relies on classical spatial amplitude filtering. High spatial frequencies within the spatial frequency range of the illumination are blocked, i.e. a highly reflective mirror is not seen (and produces in simple wording a dark field). Only light scattered by the sample may enter the detection aperture and results in a high-contrast image even for relatively weak signals.

With regard to OCT/OCM interferometers, the dark-field illumination can be accomplished by a spatial filter placed in the aperture or in a pupil plane. As a result, undesirable reflected field components of the sample are suppressed and the total sensitivity of such OCT systems is further enhanced.

These concepts have been proposed as dark-field Optical Coherence Microscopy (df-OCM) [11][12] and constitutes an extension of the previously introduced xf-OCM concept [5][6] and are realized by a blocking amplitude filter in the detection arm of a Mach-Zehnder interferometer - in both xf-OCM and df-OCM configurations the detection and illumination paths are decoupled. Furthermore, due to its annular intensity distribution in the aperture plane, the optical field generated by an axicon can also be used for coherent dark-field, whereas the detection is conceived as a gaussian mode. This leads to a significant gain in sensitivity for df-OCM when compared to xf-OCM or classical OCM. A system having a filter for suppressing a specular light contribution was disclosed in [13,14].

All of the former state of the art OCT concepts rely on beamsplitters to split the light into an illumination or the reference arm and even more important, to recombine the sample field with the reference field. However, these classical beamsplitters by design are so-called amplitude splitters and deviate the sample field back to the source. The resulting signal loss is an additional limitation especially for weakly scattered sample field, partly wasted and uselessly back propagated to the source. As an example, for a 50:50 beamsplitter this results in a decrease of the light field directed to the detection part of the interferometer by a factor of two.

There are also known another or quite similar dark-field illumination concepts adopted not only in OCM systems:

Dark field endoscopic microscope [15], where an iris in the detection arm is used as a lowpass filter to block specular rays.

Dark-field polarization-sensitive optical coherence tomography [16], Long-focus deep-dark-field retina OCT system [17] and a method and apparatus disclosed in [18] also do not resolve the aforementioned issues.

To improve the efficiency of the Bessel beam illumination and to remedy a drawback of illumination affected by shadows, a pierced mirror solution was proposed by Marchand et al. [19]. However, the reference and detection light are coupled by additional beam splitter, limiting as mentioned before the overall efficiency of the setup.

Therefore, there is a need to further improve the interferometer and detection parts of the OCM system to achieve full sensitivity.

The existing limitations within this prior art OCT instrument are improved and/or resolved by the present disclosure and open a novel and innovative way to imaging and instrument properties for an increased sensitivity. This novelty and innovation apply in particular to imaging using
1) polarization
2) differential phase
3) dispersion
but is not limited hereto.

US7009708B1discloses an optical component especially suited for common path heterodyne interferometry that comprises a symmetric dual-periscope configuration. Each periscope is substantially identical to the other with regard to certain design aspects. The resulting design is an optical component that is highly stable with variations in temperature and angular deviations.

### OBJECTIVES

An object of the invention of the present disclosure is to solve at least the above-mentioned problems and/or disadvantages and to provide at least the advantages described herewith in the following.

Another object of the invention is to minimize the signal loss i.e. the backreflected light field from the sample.

Another object of the invention is to detect higher spatial frequencies with enhanced sensitivity.

Another object of the invention is to provide a general multimode platform.

Another object of this invention is a high-sensitivity interferometer using Pupil Splitting Elements (PSEs) generating a pupil splitting for devising a set-up with a further reduction of optical surfaces from the sample to detector.

An improved signal budget allowing to "see" deeper structures and more structural details.

A PSE concept with a further potential to miniaturize OCT and OCM systems i.e. a further miniaturization of the whole imaging set-up.

An axilens providing a compact axicon-lens optical means for a further reduction of optical surfaces.

A multimode platform for combining several imaging modalities.

A general PSE system concept for confocal systems but not limited thereto.

### SUMMARY OF THE INVENTION

The invention of the present disclosure concerns an optical system according to claim 1. Other advantageous features may be found in the dependent claims.
The optical system may, for example, comprise or consist of an interferometer, for example, a sensing or imaging interferometer, or may for example comprise or consist of an interferometric sensing or imaging system.
Unlike the system realizations proposed in the prior art, the principle of invention consists in fully exploiting a useful signal of illumination and detection paths. According to the invention, both light paths, ones defined, stay not divided and not obscured. They are combined in the detection arm with full efficiency based on the proposed pupil splitting means.

To achieve the aforementioned objects, an improved system for optical coherence tomography/microscopy is provided which implements PSEs and hole-mirror subsystems.

To further achieve the aforementioned objects, a low coherence interferometric imaging device in free space configuration with separated illumination and detection light paths is disclosed.

To simplify and reduce the number of optical elements, the integration of a so-called "axilens" is proposed.

To increase and achieve further contrast enhancement appropriate polarization elements can be placed in the ray path in order to detect polarization modulating sample structures.

To further achieve the aforementioned objects, the polarization can be modulated and used in a heterodyne detection scheme for quantitative polarization tomography.

Additional advantages, objects and features of the invention will be set forth in part in the description and claims which follow and in part will become evident to those having ordinary skill in the art upon examination of the following or may learned from practice of the invention. The objects and advantages of the invention may be realized and attained as particularly pointed out in the appended claims.
The above and other objects, features, and advantages of the present invention and the manner of realizing them will become more apparent, and the invention itself will best be understood from a study of the following description with reference to the attached drawings showing some preferred embodiments of the invention.

### DEFINITIONS, TERMS AND ELEMENTS

"Source" is used to mean any source of electromagnetic radiation, preferably a coherent source or a partially coherent source, or a coherent source with sufficient stability and/or a coherent source having a (sufficiently) short coherence length, for example, less than 10 microns and down to nanometers (for example, 100nm). The source may, for example, be (but not limited to) an optical source of electromagnetic radiation, or a source having an emission wavelength at a wavelength in a wavelength range spanning the ultra-violet (UV) to the infrared (IR), for example, between 400nm and 1600nm. The emission wavelength is, for example, at a wavelength typically used for medical applications. The source may, for example, comprise or consist of a laser. An emission wavelength range can, for example, be centered at 800nm or around 800nm.

"Detector" is used herein to mean any device capable of measuring energy in an electromagnetic signal as a function of wavelength. A detector array means a plurality of detectors. In general, the preferred detector arrays used in this disclosure have their optimal sensitivity in the wavelength range of the used source. The detectors can either be one-, multidimensional or line arrays, depending on the optical setup and the optical scan system. For example, in the mostly used wavelength range of around 800nm, CMOS detectors have currently the best performance with respect to sensitivity and read out speed. However, current detector technology does not provide CMOS detectors that operate beyond the 1000nm region. Standard InGaAs and new detector technologies as for example GeSi detectors allow an extension of the detection range beyond 1000 nm and are, for example, also included as an example of this present disclosure.

"Reflector" is used herein to mean any device capable of reflecting an electromagnetic signal. Thus, "reflector" can be used to mean a mirror, an abrupt change in an index of refraction, an auto-reflecting prism as well as a periodically spaced array structure such as a Bragg reflector. Applicants note that the terms "signal", "beam" and "light" are used in a synonymously manner, for including all forms of electromagnetic radiation suitable for use in imaging systems. It is also understood, that for the purposes of this disclosure, the term "optical" is to pertain to all wavelength ranges of electromagnetic radiation, and preferably pertains to the range of 100 nanometers to 30 micrometers.

"Phase modulator" means any semiconductor or bulk device used to modulate or alter the phase of an electromagnetic field. The term "phase modulator" comprises, for example, also any liquid crystal device or any spatial light modulator which allows in addition a local lateral phase change. This phase modulation can be timely and spatially modulated on purpose and, for example, be linked via an interface to a programming device or an appropriate computer.

"PSE" (Pupil Splitting Element) can be an optical means or component based on a dome shaped glass element or a concentric diffractive optical element. This PSE is to be understood as an optical element configured to generate a Bessel beam (or, for example, a ring illumination in a corresponding Fourier plane). This PSE is also understood as an optical component or element to generate any dome shaped illumination cone or any hollow illumination cone, whatever optical realization will be used, as for example, diffractive optical elements, optical elements based on liquid crystals, or spatial light modulators or gradient optical elements.
As a further consideration and generalization any optical means allowing the separation of the illumination beam path from the detection beam path using separated parts of the sample objective aperture for illumination in a first subaperture of the objective and a different not overlapping second subaperture for detection of said objective.
The simplest realization of a Bessel beam is a ring illumination in a well-defined aperture or pupil plane. However, this realization has the disadvantage of a low efficiency of the illumination intensity. Any new optical PSE element equally falls within the scope of this present invention.

"Axilens" is any optical means combining an axicon (like) entry surface and a spherical/aspherical exit surface. The Axilens may, for example, comprise or consist of an axicon and a spherical/aspherical surface. The flipping of the element lens-axicon surfaces also provides an equivalent solution.

"Scanning optics" means any system configured to sweep an electromagnetic signal across a chosen area. Often this configuration includes optionally appropriate focusing means, appropriately positioned for performing an object-scan with either a diffraction limited focusing spot, a Bessel beam or a plurality of spots, or with a continuous line.

Beamsplitter means an optical element configured to receive an input optical field and to split or divide the received optical field or the amplitude of the received optical field into a plurality of optical fields of lower amplitude.

The aforementioned embodiments and advantage are exemplary and not shown as a limit of the present invention. The present teaching may be extended to other instrumentations. The detailed description of the present invention is intended to be illustrative, and in no case to limit the scope of this invention. Many alternatives, alterations, modification and variations will be apparent to those skilled in the art.

### BRIEF DESCRIPTION OF THE DRAWINGS

Fig **1A, 1B** and **1C** show and compare an exemplary interferometer (FIG. **1C**) of the present disclosure with the classical interferometers as a Michelson (FIG. **1A**) or a Mach-Zehnder (FIG. **1B**).
Fig.**2A** discloses an exemplary interferometer or system according to the present disclosure based on pupil splitting means.
Fig.**2B** is nearly identical to Fig.**2A****,** but shows a ring focus generation and the advantages when using a pupil splitting means.
Fig. **3** shows and discloses an exemplary interferometer or system according to the present disclosure set-up fully exploiting the pupil splitting mean's advantages.
Fig. **4A** is an exemplary symmetric realization of an interferometer or system containing pupil splitting means.
L Fig. **4B** is almost identical to Fig. **4A****,** but introduces so called Axilenses allowing to simplify and to miniaturize the set-up.
Fig. **5** shows a further exemplary system that exploits the advantages of a pupil splitting means for a darkfield confocal microscope.
Fig. **6** is similar to Fig. 5, however the scanning system is removed. Therefore, it exploits the advantages of PSE for fullfield or brightfield microscopy.
Herein, identical reference numerals are used, where possible, to designate identical elements that are common to the Figures.

### DETAILED DESCRIPTION OF THE INVENTION

Fig **1A, 1****B** and **1C** show and compare an interferometer (FIG. **1C**) of the present disclosure with the classical interferometers as a Michelson (FIG. **1A**) or a Mach-Zehnder (FIG. **1B**).
The interferometers (**100, 101**) are splitting the fields coming from the source (**110**) into 2 distinct but coherent fields. For both cases (**100, 101**) the field splitting is achieved based on beamsplitters (**140**), splitting the fields according to the splitting ratio. As is known, by those skilled in the art, the splitter is acting in the direct as well as in the inverse propagation direction. As indicated in FIG. **1B** and for the interferometer **101,** the first beamsplitter **141** is splitting the field into 2 parts: part 1 follows the path with elements **142** and **143,** part 2 with element **144** and to the sample **120.** The sample field generated via backreflection is deviated towards the detection means or detector indicated by reference **130.** As is indicated in system **101,** the weak sample field undergoes an additional field splitting at beamsplitter **144** back to the source **110.** The same argumentation is valid for the reference field as indicated by the dashed field propagators having reference numbers **122** and **121.**
As is obvious, for those skilled in the art, the same arguments hold for the interferometer **100.**

When looking at the system or interferometer **102** of the present disclosure (Fig.1C), the situation is quite different. The beamsplitter **140** is splitting the field from the source **110** into the sample field and reference field. The field propagating along beamsplitter **140,** the pupil splitting means **160** and towards the sample **120** does not have any spatial overlap with the light field propagating along the reference path towards the detector **130.** Therefore, the backreflected light from the sample **120** propagates towards or to the detector **130** without any further splitting contrary to the cases of the systems **100, 101** mentioned before.
In the exemplary embodiment of Fig.1C, the input optical field-splitting means 140 includes a first and second beam-splitter 140, the first beam-splitter 140 being located upstream of the first pupil splitting or modification means 160, and the first pupil splitting or modification means 160 being located upstream of a first hole-reflector 123, and the second beam-splitter 140 is located upstream of the second pupil splitting or modification means 160, and the second pupil splitting or modification means 160 is located upstream of a second hole-reflector 124.
The first beam-splitter 140 is arranged and configured to provide part of an input optical field to the second beam-splitter 140.
This improved signal collection represents in essence a main advantage of this disclosed set-up assuring an improved signal-to-noise ratio, an improved dynamic range and an intrinsic darkfield mode.
While the optical system of FIG.1C may include a first and a second beamsplitter, it should be understood that the embodiments described herein may more generally include an optical field or optical field intensity splitting stage or platform (or a pupil splitting stage or platform) for providing split optical fields to the pupil splitting means 160 that may, for example, comprise first and a second beamsplitter or alternatively, for example, an optical fiber containing a fiber optic splitter. The optical system may also include a pupil splitting stage or platform.

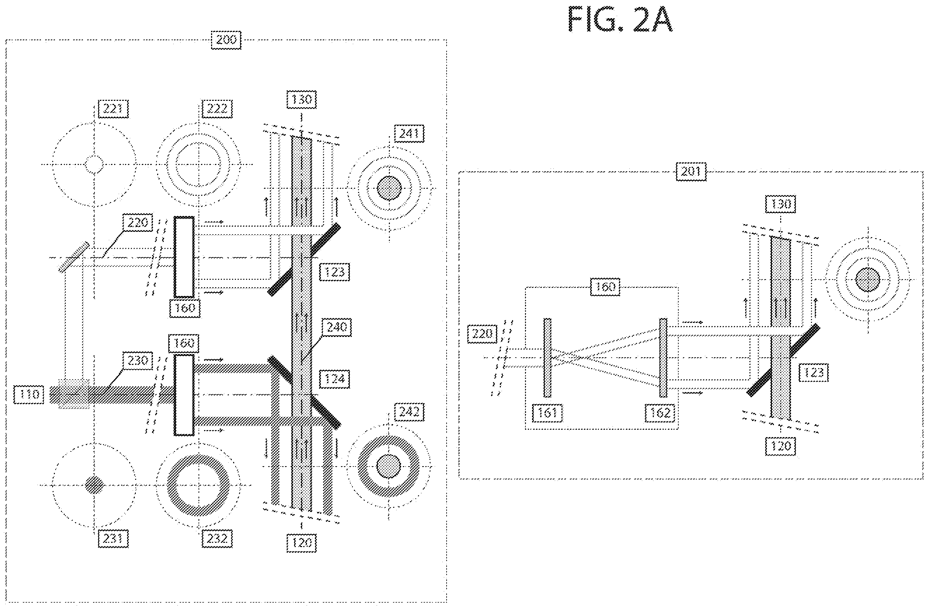

Fig. **2A** is an illustration of an exemplary optical system **200** of the present disclosure containing a pupil splitting means **160** and, in particular, a Pupil Splitting Element (PSE) hole-mirror subsystem **201,** with an example of a possible PSE realization as shown in subsystem **201** of Fig.2A, but the present disclosure is not limited hereto.
At the entrance **110** of the optical system **200,** a collimated light field is provided and split into two paths: an illumination path **230** and a reference path **220.** Due to symmetry of those paths and for simplicity, only a reference path is described in further detail.
The cross section of the collimated light field is shown at reference number **221** (reference number **231** for the illumination path **230**). This light field is deviated by the PSE **161** component of the pupil splitting means **160** into a cone shaped field (see subsystem **201** detailing pupil splitting means **160**) and, by the following PSE component **162** of the pupil splitting means **160,** is transformed into a parallel propagating ring-shaped field **222** (the inner part has no light field anymore, the light field propagates spatially in the form of (or defining) a hollow cylinder of annular cross-sectional profile), whose cross-sectional profile **222** (**232** for the illumination path **230**) is also shown in Fig.2A. This field is completely reflected by, for example, a hole mirror **123.** Reflection occurs, for example, from a surface surrounding a hole, or inner passage or section of the hole mirror **123.**
The inner part of the hole mirror **123** is configured or allows to be crossed by a secondary field (that passes fully through the hole mirror **123**) without any deviation nor interaction. The field shaping of the optical field propagating across the optical means or components **161, 162, 123** is illustrated by the cross sections **221, 222, 241** in the respective planes. The optical means or components **161, 162, 123** are elements of what the Inventors name an infinite PSE hole-mirror subsystem (Inf-PSEHM).
The component **161** of the pupil splitting means or PSE **160** is, for example, configured to spatially reshape the optical field to delimit the optical field to propagation in a delimited spatial area and further delimit a depleted spatial area devoid of the light field or devoid of light field propagation. The previously mentioned hollow cone shaped field is an example. The component **162** of the pupil splitting means or PSE **160** is configured to channel or direct the spatially reshaped optical field along a reference or illumination path.
As previously mentioned, these functions of the component **161, 162** of the pupil splitting means or PSE **160** may be achieved using diffractive optical elements, optical elements based on liquid crystals, or spatial light modulators or gradient optical elements.
A further pupil splitting means **160** and a further hole mirror **124** are, for example, included in the illumination path **230.** The sample field **240,** generated via back-reflection of the optical field shaped by the further pupil splitting means **160,** propagates through the further hole mirror **124** and the hole mirror **123** to define a central section or disc of the optical field profile **241.** The central section or disc propagates in the depleted spatial area defined by the component **161** of the reference arm.

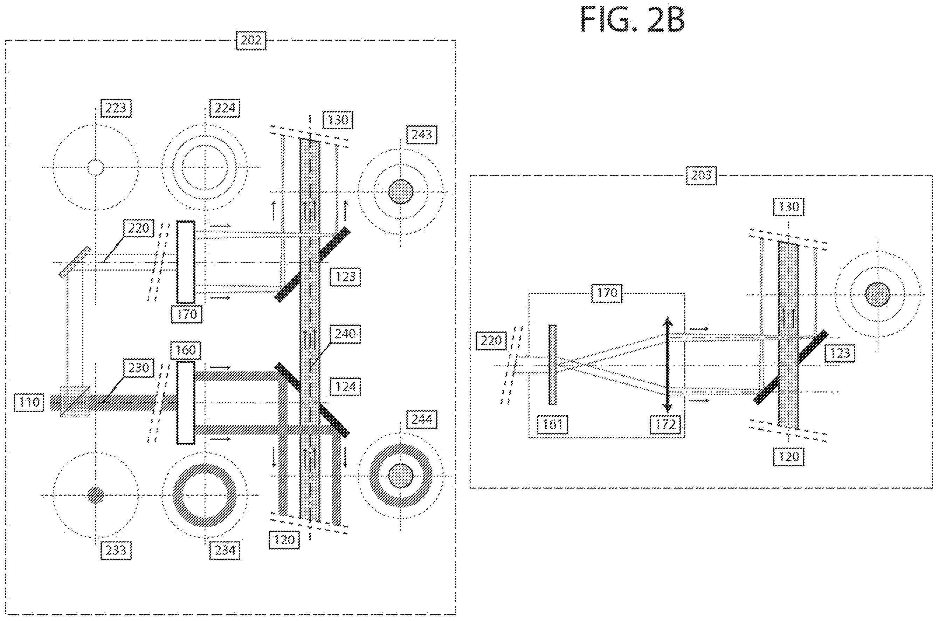

The system of Fig. **2B** is almost identical to Fig. **2A** with the PSE component **162** comprising or consisting of, for example, a lens **172,** as shown in the subsystem **203** of Fig.2B detailing the pupil splitting means **170.** Instead of a collimated ring field, the ring field is now focused by the lens **172** in a "ring focus" **243,** whose cross-sectional profile is shown in Fig.2B. Compared to Fig.2A, the ring profile produced along the reference path **220** is brought to a focus (having a focused ring cross-section), for example, between the hole mirror **123** and the detector 130.
The optical means or components **161, 172, 123** are elements of what the Inventors name a finite PSE hole-mirror subsystem (fin-PSEHM).
Again, the hole mirror **123** allows crossing light fields with no interaction. For those skilled in the art, there are several possibilities to realize such a subsystem. The same finite PSE hole-mirror subsystem (fin-PSEHM) can be applied or used in the illumination path **230.** The solution disclosed here should, however, not be considered as a limiting set-up. Any use of an alternative PSE-hole mirror system may be part of the system.
It should be noted that the ring profile is provided as a non-limiting example and other profiles are also possible, such as for example, a slit optical field profile. The hole mirror is shaped with a through hole that allows the optical field profile 240 provided from the sample 120 to pass there-through.
The mirror **123** may alternatively include a transparent section that allows the optical field 240 provided from the sample 120 to pass there-through, or may alternatively include a transparent substrate or body upon which a reflective coating is selectively deposited for selective reflection. The hole-reflectors of the systems of the present disclosure may comprises or consists of a hole-mirror, or a slit-mirror or a reflector containing a through-passage or an elongated opening through-passage.
In the exemplary systems of Figs. 2A and 2B, an input optical field-splitting means includes a beam-splitter and a split-beam reflector, the split-beam reflector being located upstream of the second pupil splitting or modification means 160, 170. The second pupil splitting or modification means 160, 170 is located upstream of the second hole-reflector 123. The beam-splitter is located upstream of the first pupil splitting or modification means 160, and the first pupil splitting or modification means 160 is located upstream of the first hole-reflector 124.
The beam-splitter is arranged and configured to provide part of an input optical field to the split-beam reflector.

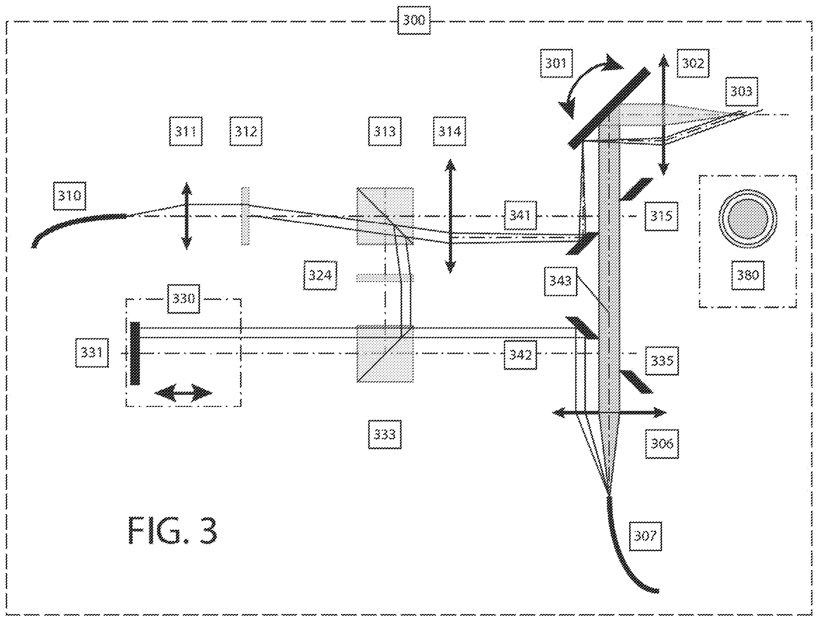

**Fig. 3** discloses another exemplary interferometric imaging system **300.** The so-called "illumination arm" starts at the fiber **310** followed by the optical means **311, 312, 313, 314, 315, 301, 302** for generating a Bessel field at sample (or sample plane/zone) **303.**
These optical means for generating a Bessel field may include, for example, a collimating lens **311,** Pupil Splitting Element PSE **312,** beamsplitter **313,** a first (focusing) lens **314,** a hole mirror **315,** a scan unit **301** and a second lens **302** for focusing onto sample **303.**
The alignment of optical means for the illumination arm is indicated by the optical axis **341.** Similarly, the optical axis **342** is indicated for the reference arm.
The Pupil Splitting Element PSE **312** and Pupil Splitting Element PSE **324** are used to adjust or define the ring-shaped profile. Both PSEs **312** and **324** act like a telescope and constitute **an inf-PSEHM sub-system.** For those skilled in the art the optical means **312, 314** and **315** constitute a fin-PSEHM sub-system. The ring-shaped field (see outer ring in cross section **380** (the inner section for example, the disk-shaped inner section in cross section **380,** being provided by the back-reflection from the sample **303**) is scanned by the scan unit **301** and imaged by objective lens **302** into the sample **303.**
The back-reflected light propagates along a detection arm i.e. across the objective lens **302,** the scan unit **301,** the hole mirrors **315** and **335** and will be focused by the lens **306** onto the fiber **307** for further signal detection and processing, at for example a detector and a processor configured for such processing located downstream in the system.
The system includes a first optical fiber 310 and first lens 311 configured to provide the input optical beam to the first pupil splitting element 312, and a second optical fiber 307 and second lens 306 configured to collect the reference beam and the sample illumination beam reflected from the sample 303 to be investigated.
For interferometric imaging this backscattered field must be superimposed with the coherent reference field. This reference originates from the same light source represented, for example, by the optical fiber **310.** The reference arm starts with the beamsplitter **313** and propagates across the optical means (Pupil Splitting Element PSE) **324,** the subunit **330** via the splitter **333,** then the hole mirror **335** via the splitter **333** and is focused and superimposed by the lens element **306** onto the entrance of output fiber **307.**
The subunit **330** contains a mirror **331** and serves to adjust the optical length of the "illumination path - detection path" with the length of the reference arm to meet the matching length condition within the tolerance given by the coherence length of the light source.
In the exemplary systems of Fig.3, an input optical field-splitting means 313,333 includes a first and second beam-splitter, the first beam-splitter 313 being located downstream of a first pupil splitting element 312, and upstream of a lens 314 and of the first hole-reflector 315. The second beam-splitter 333 is located downstream of a second pupil splitting element 324, and upstream of the second hole-reflector 335.
The first beam-splitter 313 is arranged and configured to provide part of an input optical field to the second beam-splitter 333 via the second pupil splitting element 324.
The scanning means 301 is located in an aperture or pupil position and configured to scan the sample 303 to be investigated with a Bessel beam or a depth extended focal optical field. The scanning means 301 is located downstream of the first hole-reflector 315.
The means 330 to match the optical length of the reference and sample arm is located downstream from the second beam-splitter 333 and upstream from the second hole-reflector 335. As disclosed in relation to **Fig.1A** and **Fig.1B****,** this system **300** minimizes the number of optical surfaces between the sample 303 and the detector (or output fiber) **307.** The detected light field is not exposed to classical beamsplitters like dielectric flats or prism based beamsplitters, which would divide the wavefront in such a way, that on the return path to the detector the field is deviated back to the reference or illumination path and lost.

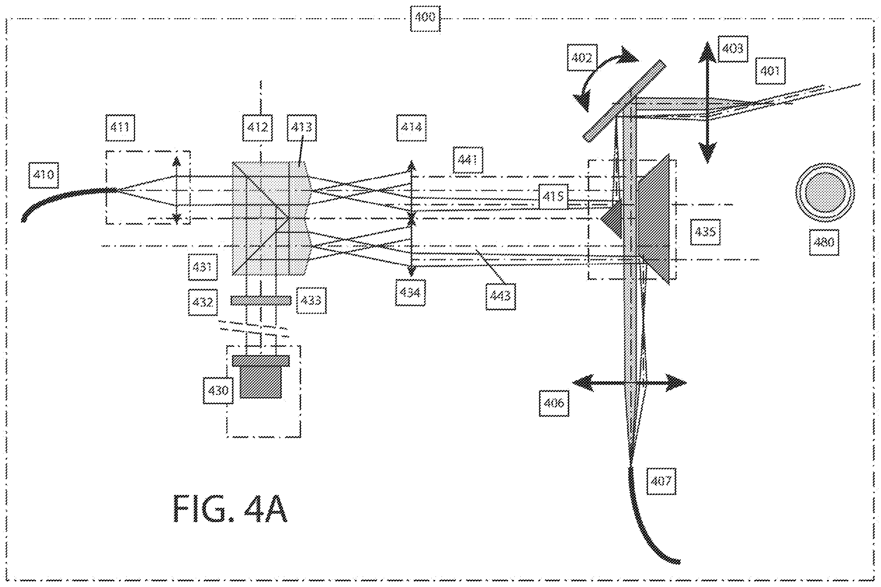

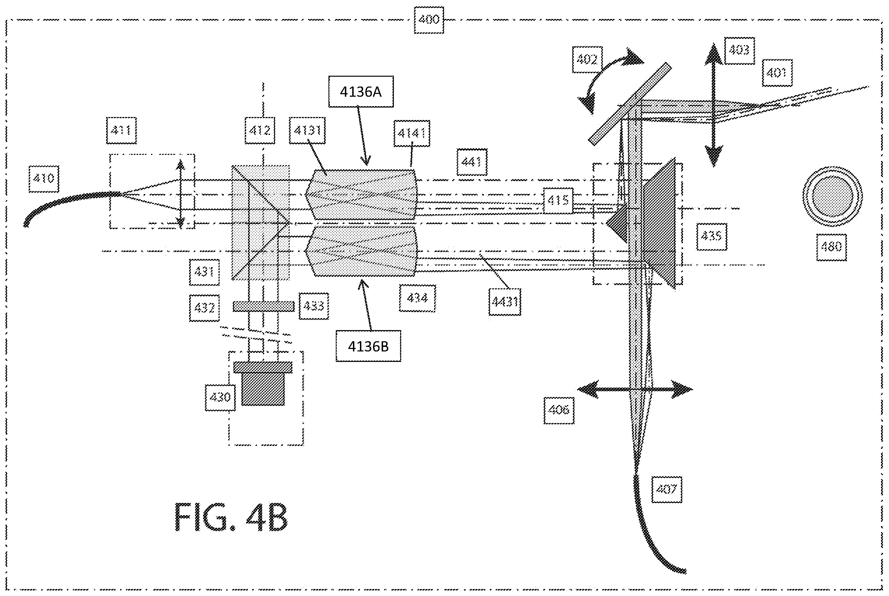

Figs. **4A** **and** **4B** discloses a further exemplary interferometric imaging system **400**.While similar to the interferometer **300** of Fig.3, both designs differ in relation to a number of elements. Elements 413 and 4131 of the systems of Fig 4A and 4B respectively comprise or consist of, for example, an axicon.
In Fig. **4B****,** the so-called "illumination arm" starts at the fiber **410** followed by the optical means **411, 412, 4131, 4141, 415, 402, 403** for generating a Bessel field at the sample (or sample plane/zone) **401**.The alignment of optical means for the illumination arm is indicated by the optical axis **441.**
These optical means for generating the Bessel field at the sample 401 may include, for example, a collimating lens **411,** beamsplitter **412,** axicon **4131,** a focusing means or element **4141,** a hole mirror/reflector **415,** a scan unit **402** and a lens **403** for directing the Bessel field onto sample **401.**
The "axilens" **4136** constitutes or consists of an optical means or component acting as (or that is) an axicon **4131** at the entrance and an optical means or component comprising of consisting of a refractive optical interface **4141** focusing the light into the pupil plane at the scan mirror position **402.** It is noted that an equivalent optical plane in a pupil plane not necessarily on the scan mirror **402** would result in an equivalent effect.
The exemplary system 400 of Fig.4B includes an axicon **4131** and a focusing element or means **4141** as an integrated single component or element forming an axilens. In contrast, the exemplary system 400 of Fig.4A includes an axicon **413** and a (focusing) lens **414** as separate elements or components that are not formed as part of a single block but provide an equivalent function and result albeit with an increased number of optical interfaces.
The axilens **4136A** comprising or consisting of elements **4131, 4141** constitute an infinite axilens hole-mirror (inf-AHM) sub-system. In contrast to the former system **300** the system **400** uses an axilens **4136A** for generating an inf-AHM subsystem i.e. a ring-shaped field (see cross section **480**) which is scanned by the scan unit **402** and imaged by objective **403** into the sample. A second axilens **4136B** is also, for example, included in the reference arm or path.
The scanning means 402 is located in an aperture or pupil position and configured to scan the sample to be investigated with a Bessel beam or a depth extended focal optical field. The scanning means 402 is located downstream of the first hole-reflector 435.
The first axilens 4136A is configured to focus the optical light beam onto a pupil plane situated at or on the scanning means 402.
The back-reflected light back-propagates across the objective **403,** the scan unit **402,** the hole mirrors **415** and **435** and will be focused by the lens **406** onto the fiber **407** for further signal detection and processing, as done in the system of Fig.3.
For interferometric imaging, this backscattered field must be superimposed with the coherent reference field. This reference originates from the same light source represented, for example, by the optical fiber **410.** The reference arm starts with the beamsplitters **412, 431** and propagates across the optical means **434** (axilens 4136B in Fig.4B, axicon 413 and lens 434 in Fig.4A), having passed via the subunit **430** and optionally the dispersion compensation element or dispersion compensator **433** to the hole mirror **435,** and is focused and superimposed by the lens element **406** onto the output fiber **407.**

The subunit **430** contains a mirror and serves to adjust and match the optical length of the illumination path-detection path with the length of the reference arm to meet the matching length condition within the tolerance given by the coherence length of the light source. An element configured to modulate the optical length of the reference arm may also be included. For example, attaching the mirror **430** to a piezo element allows to use this interferometer for phase modulation in view of a phase resolved imaging with high phase accuracy.
The means 430 to match an optical length of the reference and sample arm is located downstream from the beam-splitter 412 and upstream from the second hole-reflector 435.
In the exemplary systems of Figs. 4A and 4B, an input optical field-splitting means 412 includes the beam-splitter 412 and the first pupil splitting or modification means includes a first axilens 4136A. The beam-splitter 412 is located downstream of the first axilens 4136A and the first hole-reflector 435. The second pupil splitting or modification means includes a second axilens 4136B, the beam-splitter 412 being located downstream of the second axilens 4136B and the second hole-reflector 435.
The scanning means 402 is located in an aperture or pupil position and configured to scan the sample to be investigated with a Bessel beam or a depth extended focal optical field. The scanning means 402 is located downstream of the first hole-reflector 435.
As disclosed in relation to Fig.**1A** and Fig.**1B**, this system **400** minimizes the number of optical surfaces between the sample **403** and the detector **407.** The detected light field is not exposed to classical beamsplitters like dielectric flats or prism based beamsplitters, which would divide the wavefront in such a way that on the return path to the detector the field is deviated back to the reference or illumination path and lost.
As can be understood from the above exemplary embodiments and explanations, the present disclosure concerns an optical system 102, 200, 202, 300, 400 including an input optical field-splitting means 140, 313, 333 configured to receive an input optical field and to provide at least a sample illumination optical field propagating along a first optical path 230, 341 and at least a reference optical field propagating along a second optical path 220, 342.
The optical system further includes a first pupil splitting or modification means 160, 312, 314 and a first hole-reflector 123, 124, 315 arranged to channel or direct a back-reflected optical field to a detection or collection area 130, 307, 407 from a sample (120,303) to be investigated, and also includes a second pupil splitting or modification means 160, 170, 312, 324 and a second hole-reflector 124, 123, 335 arranged to channel or direct the reference optical field to the detection or collection area 130, 307, 407.
The first pupil splitting or modification means and the first hole-reflector are arranged to channel or direct the sample illumination optical field to the detection or collection area without directing the sample illumination optical beam (i) through the input optical field-splitting means or (ii) through a further optical field-splitting means located downstream of the input optical field-splitting means.
Alternatively or additionally, the second pupil splitting or modification means and the second hole-reflector being arranged to direct the reference optical field to the detection or collection area without directing the reference optical field (i) through the input optical field-splitting means or (ii) through a further optical field-splitting means located downstream of the input optical field-splitting means.
The first pupil splitting or modification means and the first hole-reflector are, for example, arranged to channel or direct the sample illumination optical field spatially separated from the reference optical field to the detection or collection area. The second pupil splitting or modification means and the second hole-reflector is also, for example, arranged to channel or direct the reference optical field spatially separated from the sample illumination optical field to the detection or collection area 130, 307, 407.
The optical system is configured to assure no spatial overlap, between the reflected reference optical field and the back-reflected optical field, on the first pupil splitting or modification means and the second pupil splitting or modification means. The first pupil splitting or modification means and the first hole-reflector along with the second pupil splitting or modification means and the second hole-reflector are configured to channel or direct the sample illumination optical field and the reference optical field so that there is no spatial overlap between a reflected reference optical field and the back-reflected optical field on said elements.
The second pupil splitting or modification means is, for example, configured to generate a Bessel beam or configured to deviate an optical light field of the reference optical field into a ring-shaped optical light field propagating to the detection or collection area 130, 307, 407. The first pupil splitting or modification means (160, 312, 314) can alos be configured to generate a Bessel beam or configured to deviate an optical light field of the sample illumination optical field into a ring-shaped optical light field propagating to the sample 120, 303 to be investigated.
The first and second pupil splitting or modification means can be, for example, configured to deviate the optical light field into a cone-shaped optical field and into the ring-shaped optical light field 222, 224, 232, 234, 380.
The first hole-reflector and/or the second hole-reflector comprises or consists of a hole-mirror, or a slit-mirror or a reflector containing a through-passage or an elongated opening through-passage.
As for example shown in the optical system of Fig.3, the hole-reflector and the pupil splitting or modification means may, for example, define a telescope element containing at least one or a plurality of pupil splitting components arranged to split or recast the optical field into a predefined shape.

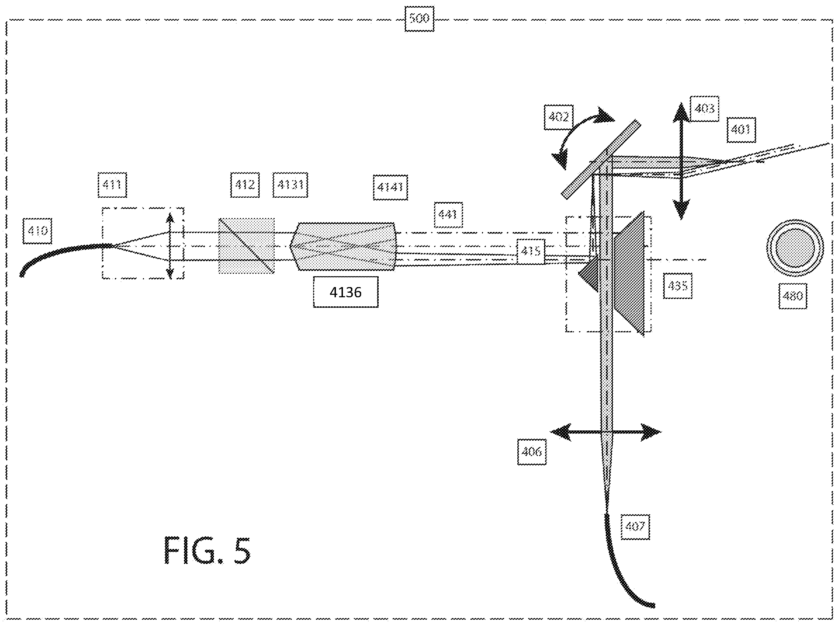

FIG. **5** shows an exemplary darkfield confocal microscope according to the present disclosure using an axilens, identical to that of Fig.4B, for generating the pupil split. In comparison to the former system **300,** this confocal imaging setup borrows the same element like the sample arm in the system **300.** As in the teaching before, this concept avoids the loss of signal between the sample **401** and the fiber end **407** which is acting as the pinhole.
The scanning means 402 is located in an aperture or pupil position and configured to scan the sample or object to be investigated with a Bessel beam or a depth extended focal optical field. The axilens 4136 is configured to focus the optical light beam onto a pupil plane situated at or on the scanning means 402.

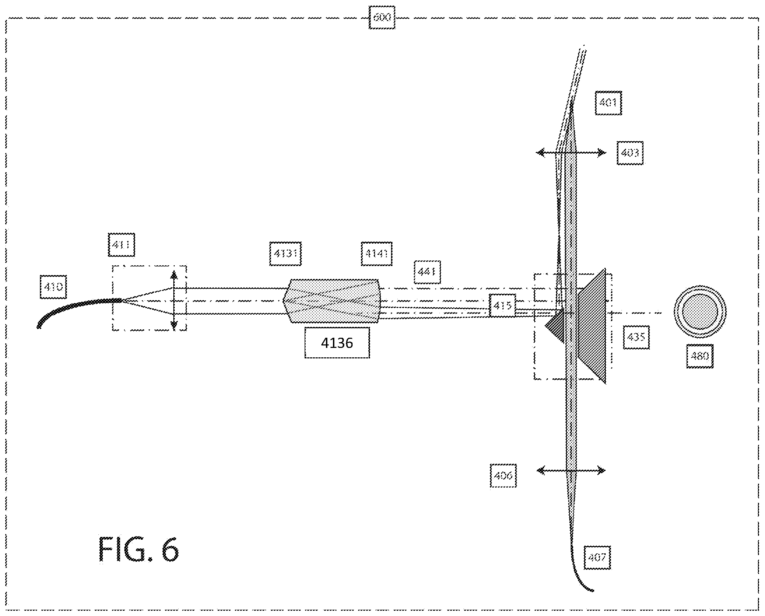

FIG. 6 shows, similarly to previous figures, an exemplary darkfield fullfield microscope according to the present disclosure, where an axilens is used for generating the pupil split. In the current configuration a fullfield approach is presented, therefore a scanning system is not needed. For those skilled in the art, the PSE can be used in a fullfield or line scanning configuration. Alternatives as e.g. a slit-scanning and/or variations are also part of the disclosed invention.
These exemplary microscopes include at least one pupil splitting or modification means 4136, 4131, 4141 and at least one hole-reflector 435 arranged to generate a dark field illumination and to channel or direct a back-reflected optical field to a detection or collection area 407 from a sample or object 401 to be investigated.
The first pupil splitting or modification means may include an axilens 4136. The axilens 4136 comprises, for example, optical means functioning as an axicon 4131 at a first entrance end and a refractive optical interface 4141 configured to focus an optical light beam at an exit end. The axilens is located downstream of the hole-reflector 435.
The first optical fiber 410 and first lens 411 are configured to provide the input optical beam to the axilens, and the second optical fiber 407 and second lens 406 are configured to collect the sample or object illumination beam reflected from the sample or object 401 to be investigated.

The above embodiments are described in relation to free-space propagation of the optical light and optical fields between system elements, however, the systems may alternatively or additionally include optical waveguides to channel the optical fields between system elements.

While the invention has been disclosed with reference to certain preferred embodiments, numerous modifications, alterations, and changes to the described embodiments, and equivalents thereof, are possible without departing from the sphere and scope of the invention. Accordingly, it is intended that the invention not be limited to the described embodiments and be given the broadest reasonable interpretation in accordance with the language of the appended claims. Features of one of the above described embodiments may be included in any other embodiment described herein.

### REFERENCES

1. E. A. Gibbs-Flournoy, P. A. Bromberg, T. P. Hofer, J. M. Samet, and R. M. Zucker, "Darkfield-Confocal Microscopy detection of nanoscale particle internalization by human lung cells," Part. Fibre Toxicol. 8, 2 (2011).
2. A. F. Fercher, C. K. Hitzenberger, G. Kamp, and S. Y. El-Zaiat, "Measurement of intraocular distances by backscattering spectral interferometry," Opt. Commun. 117(1), 43-48 (1995).
3. R. Leitgeb, C. K. Hitzenberger, and A. F. Fercher, "Performance of fourier domain vs. time domain optical coherence tomography," Opt. Express 11(8), 889-894 (2003).
4. A. G. Podoleanu, "Optical coherence tomography," J. Microsc. 247(3), 209-219 (2012).
5. R. Leitgeb, T. Lasser, A. Bachmann, L. Steinmann, and M. Villiger, "Optical imaging system with extended depth of focus," World Intellectual Property Organization patent WO2007085992A1 (August 2, 2007).
6. R. Leitgeb, M. Villiger, A. Bachmann, L. Steinmann, and T. Lasser, "Extended focus depth for Fourier domain optical coherence microscopy," Opt. Lett. 31(16), 2450-2452 (2006).
7. C. Blatter, B. Grajciar, C. M. Eigenwillig, W. Wieser, B. R. Biedermann, R. Huber, and R. A. Leitgeb, "Extended focus high-speed swept source OCT with self-reconstructive illumination," Opt. Express 19(13), 12141-12155 (2011).
8. Z. Chen, Z. Ding, and J. S. Nelson, "High resolution optical coherence tomography with an improved depth range using an axicon lens," U.S. patent US 7,072,045 B2 (July 2006).
9. T. J. Guillermo and B. E. Bouma, "Apparatus and method for low coherence ranging," United States patent US7310150B2 (December 18, 2007).
10. M. Neil, F. Massoumian, R. Juskaitis, and T. Wilson, "Method of and apparatus for generating a beam of light," U.S. patent US 7,161,656 B2 (January 2007).
11. M. Villiger, C. Pache, and T. Lasser, Optical Coherence Microscopy System Having a Filter for Suppressing a Specular Light Contribution (Google Patents, 2017).
12. C. Pache, M. Villiger, and T. Lasser, "Dark-field optical coherence microscopy," in Optical Coherence Tomography and Coherence Domain Optical Methods in Biomedicine XIV (International Society for Optics and Photonics, 2010), 7554, p. 755425.
13. M. Villiger, C. Pache, and T. Lasser, "Dark field optical coherence microscopy," United States patent US20130010283A1 (January 10, 2013).
14. M. Villiger, C. Pache, and T. Lasser, "Optical coherence microscopy system having a filter for suppressing a specular light contribution," United States patent US9791684B2 (October 17, 2017).
15. J. U. Kang and X. Liu, "Dark field endoscopic microscope," U.S. patent US 2012/0283516 A1 (November 2012).
16. Y. Yoon, Q. Li, V. H. Le, W. H. Jang, T. Wang, B. Kim, S. Son, W. K. Chung, C. Joo, and K. H. Kim, "Dark-field polarization-sensitive optical coherence tomography," Opt. Express 23(10), 12874-12886 (2015).
17. 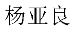 and 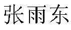 , "Long-focus deep-dark-field retina OCT system adopting Bessel band lighting mode," U.S. patent CN 105615824 A (June 2016).
18. A. T. Cenko, J. T. Meade, A. R. Hajian, and J. K. Kim, "Apparatus and methods for optical coherence tomography and confocal microscopy," U.S. patent US 8,937,723 B2 (January 2015).
19. P. J. Marchand, D. Szlag, J. Extermann, A. Bouwens, D. Nguyen, M. Rudin, and T. Lasser, "Imaging of cortical structures and microvasculature using extended-focus optical coherence tomography at 1.3 µm," Opt Lett 43(8), 1782-1785 (2018).

## Claims

1. Optical system comprising:
- an input optical field-splitting means (140, 313, 333) configured to receive an input optical field and to provide at least a sample illumination optical field propagating along a first optical path (230, 341) and at least a reference optical field propagating along a second optical path (220, 342);
- a first pupil splitting or modification means (160, 312, 314) and a first hole-reflector (123, 124, 315) arranged to channel or direct a back-reflected optical field to a detection or collection area (130, 307, 407) from a sample (120,303) to be investigated;
- a second pupil splitting or modification means (160, 170, 312, 324) and a second hole-reflector (124, 123, 335) arranged to channel or direct the reference optical field to the detection or collection area (130, 307, 407);
the first pupil splitting or modification means (160, 312, 314) and the first hole-reflector (123, 124, 315) being arranged to channel or direct the sample illumination optical field to the detection or collection area (130, 307, 407) without directing the sample illumination optical beam (i) through the input optical field-splitting means (140) or (ii) through a further optical field-splitting means located downstream of the input optical field-splitting means (313, 333), and/or the second pupil splitting or modification means (160, 170, 312, 324) and the second hole-reflector (124, 123, 335) being arranged to direct the reference optical field to the detection or collection area (130, 307, 407) without directing the reference optical field (i) through the input optical field-splitting means (140) or (ii) through a further optical field-splitting means located downstream of the input optical field-splitting means (313, 333),
**characterized in that** the first pupil splitting or modification means (160, 312, 314) is configured to generate a Bessel beam that is propagated to the sample (120, 303, 401) to be investigated via reflection by the first hole-reflector (123, 124, 315), or configured to deviate an optical light field of the sample illumination optical field into a ring-shaped optical light field (232, 234, 380) that is propagated to the sample (120, 303, 401) to be investigated via reflection by the first hole-reflector (123, 124, 315);
or
**in that** the second pupil splitting or modification means (160, 170, 312, 324) is configured to generate a Bessel beam that is propagated to the detection or collection area (130, 307, 407) via reflection by the second hole-reflector (124, 123, 335, 435), or configured to deviate an optical light field of the reference optical field into a ring-shaped optical light field (222, 224) that is propagated to the detection or collection area (130, 307, 407) via reflection by the second hole-reflector (124, 123, 335, 435).

2. Optical system according to claim 1, wherein the first and second pupil splitting or modification means are configured to deviate the optical light field into a cone-shaped optical field and into the ring-shaped optical light field (222, 224, 232, 234, 380).

3. Optical system according to any one of the previous claims, wherein the first pupil splitting or modification means (160, 312, 314) and the second pupil splitting or modification means (160, 170, 312, 324) comprises at least one or a plurality of pupil splitting components (161, 162, 172).

4. Optical system according to anyone of the previous claims, wherein the first pupil splitting or modification means (160, 312, 314) and the first hole-reflector (123, 124, 315) along with the second pupil splitting or modification means (160, 170, 312, 324) and the second hole-reflector (124, 123, 335) are configured to channel or direct the sample illumination optical field and the reference optical field so there is no spatial overlap between a reflected reference optical field and the back-reflected optical field on said elements; or
wherein the first hole-reflector (123, 124,315) and/or the second hole-reflector (124, 123, 335) comprises or consists of a hole-mirror, or a slit-mirror or a reflector containing a through-passage or an elongated opening through-passage; or
wherein the first hole-reflector (123, 124,315) and/or the second hole-reflector (124, 123, 335) comprises or consists of a hole-mirror, or a slit-mirror or a reflector containing a through-passage or an elongated opening through-passage and the first hole-reflector (123, 124) and the first pupil splitting or modification means (160) define a telescope element containing at least one or a plurality of pupil splitting components arranged to split or recast the optical field into a predefined shape (232, 242), and/or the second hole-reflector (124, 123, 335) and the second pupil splitting or modification means (160) define a telescope element containing at least one or a plurality of pupil splitting components arranged to split or recast the optical field into a predefined shape (232, 242); or
wherein the first pupil splitting or modification means (160, 312, 314) and/or the second pupil splitting or modification means (160, 170) comprises at least one pupil splitting component (161, 312) and at least one lens (172, 314).

5. Optical system according to the previous claim, wherein the first hole-reflector (123,124,335) and/or the second hole-reflector (124, 123, 335) comprises or consists of a hole-mirror, or a slit-mirror or a reflector containing a through-passage or an elongated opening through-passage,
wherein the first hole-reflector (123,124, 315) and the first pupil splitting or modification means (160, 312, 314) define a finite pupil splitting element (PSE) - hole-mirror subsystem, and/or the second hole-reflector (124, 123) and the second pupil splitting or modification means (160, 170) define a finite pupil splitting element (PSE) - hole-mirror subsystem.

6. Optical system according to any one of the previous claims 1 to 2, wherein the first pupil splitting or modification means and/or the second pupil splitting or modification means comprises or consists of at least one axilens.

7. Optical system according to any one of the previous claims, wherein the system includes at least one optical field or optical field intensity splitting stage or platform; and/or at least one pupil splitting stage or platform; or
wherein the optical system defines an interferometer, or comprises or consists of an interferometric optical system; or
wherein the optical system defines an interferometer, or comprises or consists of an interferometric optical system and
the optical system is a sensing or imaging interferometer or an interferometric sensing or imaging system.

8. Optical system according to any one of the previous claims 1 to 5 or 7, wherein an input optical field-splitting means includes a beam-splitter and a split-beam reflector, the split-beam reflector being located upstream of the second pupil splitting or modification means (160, 170), and the second pupil splitting or modification means (160, 170) being located upstream of the second hole-reflector (123); and wherein the beam-splitter is located upstream of the first pupil splitting or modification means (160), and the first pupil splitting or modification means (160) is located upstream of the first hole-reflector (124).

9. Optical system according to any one of the previous claims 1 to 5 or 7, wherein an input optical field-splitting means (313,333) includes a first and second beam-splitter (313,333), the first beam-splitter (313) being located downstream of a first pupil splitting element (312), and upstream of a lens (314) and of the first hole-reflector (315); and wherein the second beam-splitter (333) is located downstream of a second pupil splitting element (324), and upstream of the second hole-reflector (335).

10. Optical system according to the previous claim 9, further including scanning means (301) located in an aperture or pupil position and configured to scan the sample (303) to be investigated with a Bessel beam or a depth extended focal optical field.

11. Optical system according to any one of the previous claims 8 to 10, further including a first optical fiber (310) and first lens (311) configured to provide the input optical beam to the first pupil splitting element (312), and a second optical fiber (307) and second lens (306) configured to collect the reference beam and the sample illumination beam reflected from the sample (303) to be investigated.

12. Optical system according to any one of the previous claims 1 to 2, or 6, wherein an input optical field-splitting means (412) includes a beam-splitter (412) and the first pupil splitting or modification means includes a first axilens (4131, 4141), the beam-splitter (412) being located downstream of the first axilens (4136A) and the first hole-reflector (435), and wherein the second pupil splitting or modification means includes a second axilens (4131, 4141), the beam-splitter (412) being located downstream of the second axilens (4131, 4141) and the second hole-reflector (435); or
wherein an input optical field-splitting means (412) includes a beam-splitter (412) and the first pupil splitting or modification means includes a first axilens (4131, 4141), the beam-splitter (412) being located downstream of the first axilens (4136A) and the first hole-reflector (435), and wherein the second pupil splitting or modification means includes a second axilens (4131, 4141), the beam-splitter (412) being located downstream of the second axilens (4131, 4141) and the second hole-reflector (435), and the first axilens (4131, 4141), and/or the second axilens (4136B) comprise optical means functioning as an axicon (4131) at a first entrance end and a refractive optical interface (4141) configured to focus an optical light beam at an exit end.

13. Optical system according to claim 12, further including means (430) to match an optical length of the reference and sample arm, or further including means (430) to match an optical length of the reference and sample arm wherein the means (430) to match an optical length of the reference and sample arm is located downstream from the beam-splitter (412) and upstream from the second hole-reflector (435); or further including means (430) to match an optical length of the reference and sample arm wherein the means (430) to match an optical length of the reference and sample arm is located downstream from the beam-splitter (412) and upstream from the second hole-reflector (435), and further including an element configured to modulate the optical length of the reference arm.

14. Optical system according to any one of the previous claims 11 to 12, further including a first optical fiber (410) and first lens (411) configured to provide the input optical beam to the first axilens, and a second optical fiber (407) and second lens (406) configured to collect the reference beam and the sample illumination beam reflected from the sample to be investigated.

15. Optical system according to any one of the previous claims 9 to 14, wherein the optical system comprises or consists of an interferometric sensing or imaging system.

## Patentansprüche

1. Optisches System, das Folgendes umfasst:
- ein Eingangsoptikfeldteilungsmittel (140, 313, 333), das zum Empfangen eines optischen Eingangsfeldes und zum Bereitstellen wenigstens eines optischen Probenbeleuchtungsfeldes, das entlang eines ersten optischen Pfades (230, 341) propagiert, und wenigstens eines optischen Referenzfeldes, das entlang eines zweiten optischen Pfades (220, 342) propagiert, konfiguriert ist;
- ein erstes Pupillenteilungs- oder -modifikationsmittel (160, 312, 314) und einen ersten Lochreflektor (123, 124, 315), die zum Leiten oder Lenken eines zurückreflektierten optischen Feldes zu einem Detektions- oder Sammlungsbereich (130, 307, 407) von einer zu untersuchenden Probe (120, 303) eingerichtet sind;
- ein zweites Pupillenteilungs- oder -modifikationsmittel (160, 170, 312, 324) und einen zweiten Lochreflektor (124, 123, 335), die zum Leiten oder Lenken des optischen Referenzfeldes zu dem Detektions- oder Sammlungsbereich (130, 307, 407) eingerichtet sind;
wobei das erste Pupillenteilungs- oder -modifikationsmittel (160, 312, 314) und der erste Lochreflektor (123, 124, 315) zum Leiten oder Lenken des optischen Probenbeleuchtungsfeldes zu dem Detektions- oder Sammlungsbereich (130, 307, 407) konfiguriert sind, ohne den optischen Probenbeleuchtungsstrahl (i) durch das Eingangsoptikfeldteilungsmittel (140) oder (ii) durch ein weiteres Optikfeldteilungsmittel zu lenken, das sich stromabwärts von dem Eingangsoptikfeldteilungsmittel (313, 333) befindet, und/oder wobei das zweite Pupillenteilungs- oder -modifikationsmittel (160, 170, 312, 324) und der zweite Lochreflektor (124, 123, 335) zum Lenken des optischen Referenzfeldes zu dem Detektions- oder Sammlungsbereich (130, 307, 407) eingerichtet sind, ohne das optische Referenzfeld (i) durch das Eingangsoptikfeldteilungsmittel (140) oder (ii) durch ein weiteres Optikfeldteilungsmittel zu lenken, das sich stromabwärts von dem Eingangsoptikfeldteilungsmittel (313, 333) befindet,
**dadurch gekennzeichnet, dass** das erste Pupillenteilungs- oder -modifikationsmittel (160, 312, 314) zum Erzeugen eines Bessel-Strahls konfiguriert ist, der über Reflexion durch den ersten Lochreflektor (123, 124, 315) zu der zu untersuchenden Probe (120, 303, 401) propagiert wird, oder dazu konfiguriert ist, ein optisches Lichtfeld des optischen Probenbeleuchtungsfeldes in ein ringförmiges optisches Lichtfeld (232, 234, 380) zu verändern, das über Reflexion durch den ersten Lochreflektor (123, 124, 315) zu der zu untersuchenden Probe (120, 303, 401) propagiert wird;
oder
dadurch, dass das zweite Pupillenteilungs- oder -modifikationsmittel (160, 170, 312, 324) zum Erzeugen eines Bessel-Strahls konfiguriert ist, der über Reflexion durch den zweiten Lochreflektor (124, 123, 335, 435) zu dem Detektions- oder Sammlungsbereich (130, 307, 407) propagiert wird, oder dazu konfiguriert ist, ein optisches Lichtfeld des optischen Referenzfeldes in ein ringförmiges optisches Lichtfeld (222, 224) zu verändern, das über Reflexion durch den zweiten Lochreflektor (124, 123, 335, 435) zu dem Detektions- oder Sammlungsbereich (130, 307, 407) propagiert wird.

2. Optisches System nach Anspruch 1, wobei das erste und zweite Pupillenteilungs- oder -modifikationsmittel zum Verändern des optischen Lichtfeldes in ein kegelförmiges optisches Feld und in das ringförmige optische Lichtfeld (222, 224, 232, 234, 380) konfiguriert sind.

3. Optisches System nach einem der vorhergehenden Ansprüche, wobei das erste Pupillenteilungs- oder -modifikationsmittel (160, 312, 314) und das zweite Pupillenteilungs- oder -modifikationsmittel (160, 170, 312, 324) wenigstens eine oder mehrere Pupillenteilungskomponenten (161, 162, 172) umfassen.

4. Optisches System nach einem der vorhergehenden Ansprüche, wobei das erste Pupillenteilungs- oder -modifikationsmittel (160, 312, 314) und der erste Lochreflektor (123, 124, 315) zusammen mit dem zweiten Pupillenteilungs- oder -modifikationsmittel (160, 170, 312, 324) und dem zweiten Lochreflektor (124, 123, 335) zum Leiten oder Lenken des optischen Probenbeleuchtungsfeldes und des optischen Referenzfeldes derart konfiguriert sind, dass es keine räumliche Überlappung zwischen einem reflektierten optischen Referenzfeld und dem zurückreflektierten optischen Feld auf den Elementen gibt; oder
wobei der erste Lochreflektor (123, 124, 315) und/oder der zweite Lochreflektor (124, 123, 335) einen Lochspiegel oder einen Schlitzspiegel oder einen Reflektor, der eine Durchgangspassage oder eine Durchgangspassage mit länglicher Öffnung enthält, umfasst oder daraus besteht; oder
wobei der erste Lochreflektor (123, 124, 315) und/oder der zweite Lochreflektor (124, 123, 335) einen Lochspiegel oder einen Schlitzspiegel oder einen Reflektor, der eine Durchgangspassage oder eine Durchgangspassage mit länglicher Öffnung enthält, umfasst oder daraus besteht und der erste Lochreflektor (123, 124) und das erste Pupillenteilungs- oder -modifikationsmittel (160) ein Teleskopelement definieren, das wenigstens eine oder mehrere Pupillenteilungskomponenten enthält, die zum Teilen oder Umformen des optischen Feldes in eine vordefinierte Form (232, 242) eingerichtet sind, und/oder der zweite Lochreflektor (124, 123, 335) und das zweite Pupillenteilungs- oder -modifikationsmittel (160) ein Teleskopelement definieren, das wenigstens eine oder mehrere Pupillenteilungskomponenten enthält, die zum Teilen oder Umformen des optischen Feldes in eine vordefinierte Form (232, 242) eingerichtet sind; oder
wobei da erste Pupillenteilungs- oder -modifikationsmittel (160, 312, 314) und/oder das zweite Pupillenteilungs- oder -modifikationsmittel (160, 170) wenigstens eine Pupillenteilungskomponente (161, 312) und wenigstens eine Linse (172, 314) umfassen.

5. Optisches System nach dem vorhergehenden Anspruch, wobei der erste Lochreflektor (123, 124, 335) und/oder der zweite Lochreflektor (124, 123, 335) einen Lochspiegel oder einen Schlitzspiegel oder einen Reflektor, der eine Durchgangspassage oder eine Durchgangspassage mit länglicher Öffnung enthält, umfasst oder daraus besteht,
wobei der erste Lochreflektor (123, 124, 315) und das erste Pupillenteilungs- oder -modifikationsmittel (160, 312, 314) ein Finites-Pupillenteilungselement(PSE: Pupil Splitting Element)-Lochspiegeluntersystem definieren, und/oder der zweite Lochreflektor (124, 123) und das zweite Pupillenteilungs- oder -modifikationsmittel (160, 170) ein Finites-Pupillenteilungselement(PSE)-Lochspiegeluntersystem definieren.

6. Optisches System nach einem der vorhergehenden Ansprüche 1 bis 2, wobei das erste Pupillenteilungs- oder -modifikationsmittel und/oder das zweite Pupillenteilungs- oder -modifikationsmittel wenigstens eine Axilinse umfassen oder daraus bestehen.

7. Optisches System nach einem der vorhergehenden Ansprüche, wobei das System wenigstens eine Optikfeld- oder Optikfeldintensitätsteilungsstufe oder -plattform beinhaltet; und/oder wenigstens eine Pupillenteilungsstufe oder -plattform; oder
wobei das optische System ein Interferometer definiert oder ein interferometrisches optisches System umfasst oder daraus besteht; oder
wobei das optische System ein Interferometer definiert oder ein interferometrisches optisches System umfasst oder daraus besteht, und
das optische System ein Erfassungs- oder Bildgebungsinterferometer oder ein interferometrisches Erfassungs- oder Bildgebungssystem ist.

8. Optisches System nach einem der vorhergehenden Ansprüche 1 bis 5 oder 7, wobei ein Eingangsoptikfeldteilungsmittel einen Strahlteiler und einen Geteilter-Strahl-Reflektor beinhaltet, wobei sich der Geteilter-Strahl-Reflektor stromaufwärts von dem zweiten Pupillenteilungs- oder -modifikationsmittel (160, 170) befindet und sich das zweite Pupillenteilungs- oder -modifikationsmittel (160, 170) stromaufwärts von dem zweiten Lochreflektor (123) befindet; und wobei sich der Strahlteiler stromaufwärts von dem ersten Pupillenteilungs- oder -modifikationsmittel (160) befindet und sich das erste Pupillenteilungs- oder -modifikationsmittel (160) stromaufwärts von dem ersten Lochreflektor (124) befindet.

9. Optisches System nach einem der vorhergehenden Ansprüche 1 bis 5 oder 7, wobei ein Eingangsoptikfeldteilungsmittel (313, 333) einen ersten und zweiten Strahlteiler (313, 333) beinhaltet, wobei sich der erste Strahlteiler (313) stromabwärts von einem ersten Pupillenteilungselement (312) und stromaufwärts von einer Linse (314) und dem ersten Lochreflektor (315) befindet; und wobei sich der zweite Strahlteiler (333) stromabwärts von einem zweiten Pupillenteilungselement (324) und stromaufwärts von dem zweiten Lochreflektor (335) befindet.

10. Optisches System nach dem vorhergehenden Anspruch 9, das ferner ein Scanmittel (301) beinhaltet, das sich in einer Apertur- oder Pupillenposition befindet und zum Scannen der zu untersuchenden Probe (303) mit einem Bessel-Strahl oder einem optischen Feld mit erweiterter Abbildungstiefe konfiguriert ist.

11. Optisches System nach einem der vorhergehenden Ansprüche 8 bis 10, das ferner eine erste optische Faser (310) und eine erste Linse (311), die zum Liefern des optischen Eingangsstrahls an das erste Pupillenteilungselement (312) konfiguriert sind, und eine zweite optische Faser (307) und eine zweite Linse (306) umfasst, die zum Sammeln des Referenzstrahls und des Probenbeleuchtungsstrahls konfiguriert sind, der von der zu untersuchenden Probe (303) reflektiert wird.

12. Optisches System nach einem der vorhergehenden Ansprüche 1 bis 2 oder 6, wobei ein Eingangsoptikfeldteilungsmittel (412) einen Strahlteiler (412) beinhaltet und das erste Pupillenteilungs- oder -modifikationsmittel eine erste Axilinse (4131, 4141) beinhaltet, wobei sich der Strahlteiler (412) stromabwärts von der ersten Axilinse (4136A) und dem ersten Lochreflektor (435) befindet, und wobei das zweite Pupillenteilungs- oder -modifikationsmittel eine zweite Axilinse (4131, 4141) beinhaltet, wobei sich der Strahlteiler (412) stromabwärts von der zweiten Axilinse (4131, 4141) und dem zweiten Lochreflektor (435) befindet; oder
wobei ein Eingangsoptikfeldteilungsmittel (412) einen Strahlteiler (412) beinhaltet und das erste Pupillenteilungs- oder -modifikationsmittel eine erste Axilinse (4131, 4141) beinhaltet, wobei sich der Strahlteiler (412) stromabwärts von der ersten Axilinse (4136A) und dem ersten Lochreflektor (435) befindet, und wobei das zweite Pupillenteilungs- oder -modifikationsmittel eine zweite Axilinse (4131, 4141) beinhaltet, wobei sich der Strahlteiler (412) stromabwärts von der zweiten Axilinse (4131, 4141) und dem zweiten Lochreflektor (435) befindet, und die erste Axilinse (4131, 4141) und/oder die zweite Axilinse (4136B) ein optisches Mittel, das als ein Axicon (4131) fungiert, an einem ersten Eintrittsende und eine refraktive optische Grenzfläche (4141), die zum Fokussieren eines optischen Lichtstrahls konfiguriert ist, an einem Austrittsende umfassen.

13. Optisches System nach Anspruch 12, das ferner ein Mittel (430) zum Angleichen einer optischen Länge des Referenz- und Probenarms beinhaltet, oder
das ferner ein Mittel (430) zum Angleichen einer optischen Länge des Referenz- und Probenarms beinhaltet, wobei sich das Mittel (430) zum Angleichen einer optischen Länge des Referenz- und Probenarms stromabwärts von dem Strahlteiler (412) und stromaufwärts von dem zweiten Lochreflektor (435) befindet; oder das ferner ein Mittel (430) zum Angleichen einer optischen Länge des Referenz- und Probenarms beinhaltet, wobei sich das Mittel (430) zum Angleichen einer optischen Länge des Referenz- und Probenarms stromabwärts von dem Strahlteiler (412) und stromaufwärts von dem zweiten Lochreflektor (435) befindet, und das ferner ein Element beinhaltet, das zum Modulieren der optischen Länge des Referenzarms konfiguriert ist.

14. Optisches System nach einem der vorhergehenden Ansprüche 11 bis 12, das ferner eine erste optische Faser (410) und eine erste Linse (411), die zum Liefern des optischen Eingangsstrahls an die erste Axilinse konfiguriert sind, und eine zweite optische Faser (407) und eine zweite Linse (406) umfasst, die zum Sammeln des Referenzstrahls und des Probenbeleuchtungsstrahls konfiguriert sind, der von der zu untersuchenden Probe reflektiert wird.

15. Optisches System nach einem der vorhergehenden Ansprüche 9 bis 14, wobei das optische System ein interferometrisches Erfassungs- oder Bildgebungssystem umfasst oder daraus besteht.

## Revendications

1. Système optique comprenant :
- un moyen de séparation de champ optique d'entrée (140, 313, 333) conçu pour recevoir un champ optique d'entrée et pour fournir au moins un champ optique d'éclairage d'échantillon se propageant le long d'un premier chemin optique (230, 341) et au moins un champ optique de référence se propageant le long d'un deuxième chemin optique (220, 342) ;
- un premier moyen de division ou modification de pupille (160, 312, 314) et un premier réflecteur à trou (123, 124, 315) agencés pour canaliser ou diriger un champ optique rétroréfléchi vers une zone de détection ou de collecte (130, 307, 407) depuis un échantillon (120, 303) à étudier ;
- un deuxième moyen de division ou modification de pupille (160, 170, 312, 324) et un deuxième réflecteur à trou (124, 123, 335) agencés pour canaliser ou diriger le champ optique de référence vers la zone de détection ou de collecte (130, 307, 407) ;
le premier moyen de division ou modification de pupille (160, 312, 314) et le premier réflecteur à trou (123, 124, 315) étant agencés pour canaliser ou diriger le champ optique d'éclairage d'échantillon vers la zone de détection ou de collecte (130, 307, 407) sans diriger le faisceau optique d'éclairage d'échantillon (i) à travers le moyen de séparation de champ optique d'entrée (140) ou (ii) à travers un autre moyen de séparation de champ optique situé en aval du moyen de séparation de champ optique d'entrée (313, 333), et/ou le deuxième moyen de division ou modification de pupille (160, 170, 312, 324) et le deuxième réflecteur à trou (124, 123, 335) étant agencés pour diriger le champ optique de référence vers la zone de détection ou de collecte (130, 307, 407) sans diriger le champ optique de référence (i) à travers le moyen de séparation de champ optique d'entrée (140) ou (ii) à travers un autre moyen de séparation de champ optique situé en aval du moyen de séparation de champ optique d'entrée (313, 333),
**caractérisé en ce que** le premier moyen de division ou modification de pupille (160, 312, 314) est conçu pour générer un faisceau de Bessel qui est propagé jusqu'à l'échantillon (120, 303, 401) à étudier par réflexion par le premier réflecteur à trou (123, 124, 315), ou conçu pour dévier un champ lumineux optique du champ optique d'éclairage d'échantillon pour produire un champ lumineux optique de forme annulaire (232, 234, 380) qui est propagé jusqu'à l'échantillon (120, 303, 401) à étudier par réflexion par le premier réflecteur à trou (123, 124, 315) ;
ou
**en ce que** le deuxième moyen de division ou modification de pupille (160, 170, 312, 324) est conçu pour générer un faisceau de Bessel qui est propagé jusqu'à la zone de détection ou de collecte (130, 307, 407) par réflexion par le deuxième réflecteur à trou (124, 123, 335, 435), ou conçu pour dévier un champ lumineux optique du champ optique de référence pour produire un champ lumineux optique de forme annulaire (222, 224) qui est propagé jusqu'à la zone de détection ou de collecte (130, 307, 407) par réflexion par le deuxième réflecteur à trou (124, 123, 335, 435).

2. Système optique selon la revendication 1, dans lequel les premier et deuxième moyens de division ou modification de pupille sont conçus pour dévier le champ lumineux optique pour produire un champ optique de forme conique et pour produire le champ lumineux optique de forme annulaire (222, 224, 232, 234, 380).

3. Système optique selon l'une quelconque des revendications précédentes, dans lequel le premier moyen de division ou modification de pupille (160, 312, 314) et le deuxième moyen de division ou modification de pupille (160, 170, 312, 324) comprennent au moins un composant ou une pluralité de composants de division de pupille (161, 162, 172).

4. Système optique selon l'une quelconque des revendications précédentes, dans lequel le premier moyen de division ou modification de pupille (160, 312, 314) et le premier réflecteur à trou (123, 124, 315), ainsi que le deuxième moyen de division ou modification de pupille (160, 170, 312, 324) et le deuxième réflecteur à trou (124, 123, 335) sont conçus pour canaliser ou diriger le champ optique d'éclairage d'échantillon et le champ optique de référence pour qu'il n'y ait pas de chevauchement spatial entre un champ optique de référence réfléchi et le champ optique rétroréfléchi sur lesdits éléments ; ou
dans lequel le premier réflecteur à trou (123, 124, 315) et/ou le deuxième réflecteur à trou (124, 123, 335) comprennent ou consistent en un miroir à trou, ou un miroir à fente, ou un réflecteur contenant un passage traversant ou un passage traversant à ouverture allongée ; ou
dans lequel le premier réflecteur à trou (123, 124, 315) et/ou le deuxième réflecteur à trou (124, 123, 335) comprennent ou consistent en un miroir à trou, ou un miroir à fente, ou un réflecteur contenant un passage traversant ou un passage traversant à ouverture allongée, et le premier réflecteur à trou (123, 124) et le premier moyen de division ou modification de pupille (160) définissent un élément de télescope contenant au moins un composant ou une pluralité de composants de division de pupille agencés pour séparer ou remodeler le champ optique en une forme prédéfinie (232, 242), et/ou le deuxième réflecteur à trou (124, 123, 335) et le deuxième moyen de division ou modification de pupille (160) définissent un élément de télescope contenant au moins un composant ou une pluralité de composants de division de pupille agencés pour séparer ou remodeler le champ optique en une forme prédéfinie (232, 242) ; ou
dans lequel le premier moyen de division ou modification de pupille (160, 312, 314) et/ou le deuxième moyen de division ou modification de pupille (160, 170) comprennent au moins un composant de division de pupille (161, 312) et au moins une lentille (172, 314).

5. Système optique selon la revendication précédente, dans lequel le premier réflecteur à trou (123, 124, 335) et/ou le deuxième réflecteur à trou (124, 123, 335) comprennent ou consistent en un miroir à trou, ou un miroir à fente, ou un réflecteur contenant un passage traversant ou un passage traversant à ouverture allongée, dans lequel le premier réflecteur à trou (123, 124, 315) et le premier moyen de division ou modification de pupille (160, 312, 314) définissent un sous-système élément de division de pupille (PSE) - miroir à trou fini, et/ou le deuxième réflecteur à trou (124, 123) et le deuxième moyen de division ou modification de pupille (160, 170) définissent un sous-système élément de division de pupille (PSE) - miroir à trou fini.

6. Système optique selon l'une quelconque des revendications 1 à 2 précédentes, dans lequel le premier moyen de division ou modification de pupille et/ou le deuxième moyen de division ou modification de pupille comprennent ou consistent en au moins un axilens.

7. Système optique selon l'une quelconque des revendications précédentes, le système comportant au moins une platine ou plate-forme de séparation de champ optique ou d'intensité de champ optique ; et/ou au moins une platine ou plate-forme de division de pupille ; ou
le système optique définissant un interféromètre, ou comprenant ou consistant en un système optique interférométrique ; ou
le système optique définissant un interféromètre, ou comprenant ou consistant en un système optique interférométrique et
le système optique étant un interféromètre de détection ou d'imagerie ou un système de détection ou d'imagerie interférométrique.

8. Système optique selon l'une quelconque des revendications 1 à 5 ou 7 précédentes, dans lequel un moyen de séparation de champ optique d'entrée comporte un séparateur de faisceau et un réflecteur de faisceau séparé, le réflecteur de faisceau séparé étant situé en amont du deuxième moyen de division ou modification de pupille (160, 170), et le deuxième moyen de division ou modification de pupille (160, 170) étant situé en amont du deuxième réflecteur à trou (123) ; et dans lequel le séparateur de faisceau est situé en amont du premier moyen de division ou modification de pupille (160), et le premier moyen de division ou modification de pupille (160) est situé en amont du premier réflecteur à trou (124).

9. Système optique selon l'une quelconque des revendications 1 à 5 ou 7 précédentes, dans lequel un moyen de séparation de champ optique d'entrée (313, 333) comporte un premier et un deuxième séparateur de faisceau (313, 333), le premier séparateur de faisceau (313) étant situé en aval d'un premier élément de division de pupille (312), et en amont d'une lentille (314) et du premier réflecteur à trou (315) ; et dans lequel le deuxième séparateur de faisceau (333) est situé en aval d'un deuxième élément de division de pupille (324), et en amont du deuxième réflecteur à trou (335).

10. Système optique selon la revendication 9 précédente, comprenant en outre un moyen de balayage (301) situé à une position d'ouverture ou de pupille et conçu pour balayer l'échantillon (303) à étudier avec un faisceau de Bessel ou un champ optique focal à profondeur étendue.

11. Système optique selon l'une quelconque des revendications 8 à 10 précédentes, comportant en outre une première fibre optique (310) et une première lentille (311) conçues pour fournir le faisceau optique d'entrée au premier élément de division de pupille (312), et une deuxième fibre optique (307) et une deuxième lentille (306) conçues pour collecter le faisceau de référence et le faisceau d'éclairage d'échantillon réfléchi depuis l'échantillon (303) à étudier.

12. Système optique selon l'une quelconque des revendications 1 à 2 ou 6 précédentes, dans lequel un moyen de séparation de champ optique d'entrée (412) comporte un séparateur de faisceau (412) et le premier moyen de division ou modification de pupille comporte un premier axilens (4131, 4141), le séparateur de faisceau (412) étant situé en aval du premier axilens (4136A) et du premier réflecteur à trou (435), et dans lequel le deuxième moyen de division ou modification de pupille comporte un deuxième axilens (4131, 4141), le séparateur de faisceau (412) étant situé en aval du deuxième axilens (4131, 4141) et du deuxième réflecteur à trou (435) ; ou dans lequel un moyen de séparation de champ optique d'entrée (412) comporte un séparateur de faisceau (412) et le premier moyen de division ou modification de pupille comporte un premier axilens (4131, 4141), le séparateur de faisceau (412) étant situé en aval du premier axilens (4136A) et du premier réflecteur à trou (435), et dans lequel le deuxième moyen de division ou modification de pupille comporte un deuxième axilens (4131, 4141), le séparateur de faisceau (412) étant situé en aval du deuxième axilens (4131, 4141) et du deuxième réflecteur à trou (435), et le premier axilens (4131, 4141) et/ou le deuxième axilens (4136B) comprennent un moyen optique fonctionnant comme un axicon (4131) à une première extrémité d'entrée et une interface optique réfractive (4141) conçue pour focaliser un faisceau lumineux optique à une extrémité de sortie.

13. Système optique selon la revendication 12, comportant en outre un moyen (430) pour faire correspondre une longueur optique du bras de référence et du bras d'échantillon, ou
comportant en outre un moyen (430) pour faire correspondre une longueur optique du bras de référence et du bras d'échantillon, dans lequel le moyen (430) pour faire correspondre une longueur optique du bras de référence et du bras d'échantillon est situé en aval du séparateur de faisceau (412) et en amont du deuxième réflecteur à trou (435) ; ou comportant en outre un moyen (430) pour faire correspondre une longueur optique du bras de référence et du bras d'échantillon, dans lequel le moyen (430) pour faire correspondre une longueur optique du bras de référence et du bras d'échantillon est situé en aval du séparateur de faisceau (412) et en amont du deuxième réflecteur à trou (435), et comportant en outre un élément conçu pour moduler la longueur optique du bras de référence.

14. Système optique selon l'une quelconque des revendications 11 à 12 précédentes, comportant en outre une première fibre optique (410) et une première lentille (411) conçues pour fournir le faisceau optique d'entrée au premier axilens, et une deuxième fibre optique (407) et une deuxième lentille (406) conçues pour collecter le faisceau de référence et le faisceau d'éclairage d'échantillon réfléchi depuis l'échantillon à étudier.

15. Système optique selon l'une quelconque des revendications 9 à 14 précédentes, le système optique comprenant ou consistant en un système de détection ou d'imagerie interférométrique.
